# EUROPÄISCHE PATENTSCHRIFT

(11) **EP 2 710 792 B1**
(45) Veröffentlichungstag und Bekanntmachung des Hinweises auf die Patenterteilung: **14.10.2015**
(21) Anmeldenummer: 12722680.1
(22) Anmeldetag: 05.05.2012
(51) Int. Cl.: H04N 1/00

(54) **VERFAHREN ZUR DETEKTION DER BREITE UND POSITION VON DOKUMENTEN ANHAND VON BILDINFORMATIONEN IN EINEM GROSSFORMATIGEN SCANNER-SYSTEM**
METHOD FOR DETECTING THE WIDTH AND POSITION OF DOCUMENTS USING IMAGE INFORMATION IN A LARGE-FORMAT SCANNER SYSTEM
PROCÉDÉ DE DÉTECTION DE LA LARGEUR ET DE LA POSITION DE DOCUMENTS SUR LA BASE D'INFORMATIONS IMAGES DANS UN SYSTÈME DE BALAYAGE GRAND FORMAT

(30) Priorität: 16.05.2011 DE 102011101725
(43) Veröffentlichungstag der Anmeldung: 26.03.2014
(73) Patentinhaber: Roth + Weber GmbH, 57520 Niederdreisbach (DE)
(72) Erfinder: KÄMPFLEIN, Simon, 57520 Friedewald (DE); SCHÖLPEN, Burkhard, 57072 Siegen (DE)
(74) Vertreter: Grosse, Wolf-Dietrich Rüdiger
(86) Internationale Anmeldenummer: PCT/EP2012/001940
(87) Internationale Veröffentlichungsnummer: WO 2012/156036

(56) Entgegenhaltungen:
- EP-A2- 0 863 486
- EP-A2- 1 229 714
- EP-A2- 1 229 715
- US-A- 5 323 473

## Beschreibung

Die Erfindung betrifft ein Verfahren zur Erkennung und Detektion der Breite und Position von Dokumenten in einem großformatigen Scanner-System, beispielsweise einem Durchzugsscanner, anhand aufgenommener Bildinformationen, wobei das Scanner-System Bilderfassungselemente, beispielsweise CI-Sensoren, zur Aufnahme der Bildinformationen, eine davor angeordneten Optik und einen den Bilderfassungselementen gegenüber angeordneten Reflektor aufweist.

Bekannt sind Verfahren, bei dem durch zusätzliche im Dokumententransport angebrachte Sensoren, wie beispielsweise Reflexlichtschranken, die Dokumentenbreite ermittelt wird. Die Erkennungsgenauigkeit ist hier durch die Anordnung und Anzahl der Sensoren begrenzt. Dieses Verfahren eignet sich daher nur für die Erkennung einer begrenzten Anzahl von Formaten, beispielsweise den verschiedenen DIN-Formaten.

Bei einem Scanner mit Mittelanlage ohne ein mechanisches Hilfsmittel zur zentrierten Anlage des Dokuments muss neben der Breite des Dokuments auch die Position ermittelt werden, um dem Bediener die Anlage des Dokuments mit einer gewissen Toleranz zu ermöglichen. Dies macht den Einsatz des oben beschriebenen Verfahrens auch bei einer begrenzten Anzahl von zu erkennenden Formaten unbrauchbar, da die Erkennungsgenauigkeit auch bei einer hohen Anzahl von Lichtschranken gering ist.

Daneben sind mehrere Verfahren bekannt, die durch Auswertung der Bildinformationen die Dokumentenbreite ermitteln. Dazu wird der vordere Dokumentenbereich einschließlich der Vorderkante und den Seitenkanten des Dokuments mit den Bilderfassungselementen des Scanners aufgezeichnet. Dies kann durch einen dem eigentlichen Scan vorausgehenden Prescan erfolgen oder dadurch erreicht werden, dass das gesamte Dokument mit der maximalen Scanbreite erfasst und anschließend der vordere Bereich aus den Bilddaten extrahiert wird. Vorteil dieser Verfahren ist, dass keine zusätzlichen Sensoren für die Detektion der Dokumentenbreite erforderlich sind.

Um die Breite eines Dokuments aus diesen Bilddaten zu ermitteln, muss entschieden werden, welche Bildpunkte zum Dokument und welche zum Hintergrund und/oder Reflektor gehören. Probleme dieser Art werden im Bereich der Bildverarbeitung **Segmentierung** genannt.

Ein bekanntes Verfahren zur Segmentierung und ein für eine Breitenerkennung einsetzbares Verfahren ist das **"Schwellwertverfahren",** welches auf einer helligkeitsbasierten Erkennung beruht. Die Bildpunkte werden dabei auf Grund ihrer Helligkeit bzw. Farbe dem Dokument oder Reflektor zugeordnet. Das am weitesten links bzw. rechts liegende und als Dokumentenpixel klassifizierte Pixel wird als Übergang zwischen Reflektor und Dokument interpretiert und somit können die Breite und die Position eines Dokuments bestimmt werden. Bei diesem Verfahren wird ausgenutzt, dass die Farbe bzw. Helligkeit des Reflektors, der Reflektorwalze, die ja bekannt ist, in der Regel nicht mit der Farbe bzw. Helligkeit des Dokuments übereinstimmt.

In der Praxis treten jedoch eine Reihe von Störungen auf, die zu einer sehr geringen Trefferquote des Verfahrens beim Einsatz für die Breitenerkennung in einem Großformat-Scanner führen:
- Verschmutzungen des Reflektors (Reflektorwalze(n)),
- Verschmutzungen der Optik, beispielsweise der Glasscheibe, sowie
- Änderung des Helligkeitswertes des Reflektors mit zunehmendem Luftspalt zwischen Glasscheibe und Reflektorwalze, die insbesondere bei Dokumenten mit größerer Stärke auftritt.

Ein weiterer Nachteil des Verfahrens ist, dass die Farbe und/oder Helligkeit des Reflektors von der des Dokuments abweichen muss. Unabhängig von der Breitenerkennung hat sich jedoch ein weißer Reflektor als vorteilhaft erwiesen, da dieser im gescannten Bild beispielsweise bei Löchern etc. im Dokument weiß erscheint und somit dem meist vorkommenden Dokumentenhintergrund (Papierweiß) entspricht. Auch bei transparenten Vorlagen ist ein weißer Reflektor optimal. Im Zusammenhang mit einer Breitenerkennung durch ein Schwellwertverfahren entsteht hier jedoch das Problem, dass sich Reflektorfarbe und/oder -helligkeit und Dokumentenfarbe und/oder -helligkeit insbesondere im Randbereich i. d. R. nicht oder kaum unterscheiden. Somit ist das Verfahren unter diesen Voraussetzungen unbrauchbar.

Daneben sind auch sogenannte **kantenorientierte Verfahren** zur Segmentierung bekannt. Bei diesen Verfahren wird im Bild nach Kanten gesucht, die in der Regel Objektübergänge darstellen. Im beschriebenen Anwendungsfall treten solche Objektübergänge zwischen Dokument und Reflektor auf, die dann durch das Verfahren als Kante erkannt werden. Diese Kanten treten auch dann auf, wenn Reflektor und Dokument die gleiche Helligkeit bzw. Farbe besitzen, da bei Scannern mit CI-Sensoren (Contact Image Sensoren) durch die Anordnung der Beleuchtungsquelle an den Übergängen zwischen Reflektor und Dokument ein Schatten entsteht. Dies ist ein großer Vorteil dieses Verfahrens gegenüber den zuvor genannten Schwellwertverfahren. Um die Dokumentenbreite zu ermitteln, muss das Verfahren die senkrechten Papierkanten links und rechts der Vorlage ermitteln.

In der Praxis kommt es jedoch auch bei diesen Verfahren sehr häufig zu Fehlererkennungen, da oft die Kanten am Übergang zwischen Reflektor und Dokument schwächer als durch Störungen entstandene sogenannte "Scheinkanten" sind.

Diese Störungen entstehen durch
- Verschmutzungen des Reflektors (Reflektorwalze(n)) sowie
- Verschmutzungen der Optik (bspw. Glasscheibe).

Insbesondere Verschmutzungen des Reflektors lassen sich in der Praxis nicht vermeiden und führen bei einem Scanner mit nicht angetriebenen, kaskadenförmig angeordneten Reflektorwalzen zu senkrechten "Scheinkanten", da einzelne Reflektorwalzen während des Scans nicht in Rotation versetzt werden. Diese "Scheinkanten" sind vertikale Streifen auf Reflektorwalze und/oder Glasscheibe, die aufgrund von Abrieb der darüber bewegten Scanvorlage.

Außerdem entsteht bei modernen CI-Sensoren mit Mehrfachbeleuchtung nur ein sehr schwacher Schattenwurf an den senkrechten Übergängen zwischen Reflektor und Dokument und führt daher nur zu einer sehr schwachen senkrechten Kante.

Daneben sind **modellbasierte Verfahren** bekannt. Hier wird auf Basis eines Modells der Objekte eine Suche im Bild durchgeführt. Bei der Breitenerkennung bietet sich hier ein Modell zur Suche von Ecken an. Dieses Verfahren ist gegenüber dem zuvor beschriebenen kantenorientierten Verfahren robuster gegenüber Störungen. Das Verfahren hat jedoch den Nachteil, dass Dokumente die durch Eselsohren oder Einrisse nicht dem Eckenmodell entsprechen, nicht korrekt erkannt werden. Außerdem kommt es auch bei diesem Verfahren in Kombination mit modernen CI-Sensoren mit Mehrfachbeleuchtung, die nur einen sehr geringen Schattenwurf an den senkrechten Dokumentenkanten erzeugen, häufig zu Fehlerkennungen.

Die EP 1 229 714 A2 offenbart ein gattungsgemäßes Verfahren, bei dem zunächst ein Prescan des in der Breite zu erkennenden Dokuments vor einem lichtreflektierenden Hintergrund durchgeführt wird. In einem weiteren Schritt wird ein Bereich des Dokuments vor einem lichtabsorbierenden Hintergrund aufgenommen. Diese vom Dokument gescannten und aufgenommenen Bilddaten werden anschließend über eine Groberkennung und eine Feinerkennung weiterverarbeitet. Nach diesem Verfahren lassen sich die zu ermittelte Breite und Position von Dokumenten nur ungenau bestimmen.

Die US 5 323 473 A offenbart ein gattungsgemäßes Verfahren, bei dem sukzessive Scans eines Dokuments vorgenommen werden, die anschließend mit einem Referenzscan verglichen werden. Hier ist es schon bekannt, ein Referenzglied durch eine Videokamera aufzunehmen, ohne dass dabei ein Dokument in der Scanebene vorhanden ist. Aber auch nach diesem Verfahren lassen sich die zu ermittelte Breite und Position von Dokumenten nur ungenau bestimmen.

Die Erfindung geht von der Aufgabe aus, bei einem Scan-Verfahren der eingangs genannten Art eine sichere Erkennung auch bei nur minimaler Schattenbildung an Übergängen von Dokumenten auf Reflektor, bei geringen Helligkeitsunterschieden zwischen Dokument und Reflektor und bei Störungen durch verschmutzte Reflektoren oder Optik sowie bei Eselsohren und/oder eingerissenen Ecken zu ermöglichen.

Die Aufgabe wird erfindungsgemäß für ein Verfahren der eingangs genannten Art durch die im Patentanspruch 1 angegebenen Merkmale gelöst. Vorteilhafte Ausbildungen sind in den abhängigen Patentansprüchen angegeben.

Die Aufgabe wird erfindungsgemäß durch folgende Schritte gelöst:
- S1: Vorverarbeitung der, vor Eintreffen des Dokuments (4) auf dem Reflektor aufgenommenen Bildinformationen zur Reduzierung von Störungen durch Verschmutzungen von Optik und Reflektor,
- S2: Groberkennung von horizontalen und/oder vertikalen Übergangsbereichen (12, 13) von Reflektor auf das Dokument (4) mit den Teilschritten
S2a Aufteilung des Scan-Bilds in vertikaler Richtung in gleichmäßige Bildstreifen (14),
S2b Ermittlung von statistischen Größen für jeden Bildstreifen (14),
S2c Untersuchung des Scan-Bilds in den Bildstreifen (14) mit festen Schwellwerten auf Abweichungen, derart, dass, wenn ein Wert eine der statistischen Größen eines Bildstreifens (14) den Schwellwert übersteigt, dieser Bereich als vertikaler Übergangsbereich (13) zwischen Reflektor und Dokument (4) erkannt wird,
S2d Untersuchung der Bildstreifen (14) zur Bestimmung des horizontalen Übergangsbereiches (12) durch zeilenweise Bildung des Mittelwertes und Ermittlung hinreichend starker und steiler Kanten,
wobei die Bildstreifen (14) von der Senkrechten schrittweise bis zu einem Winkel von 90°, vorzugsweise 45° gedreht werden, und
- S1: Feinerkennung von horizontalen und/oder vertikalen Dokumentenkanten (10, 11) innerhalb der durch die Groberkennung gemäß Schritt S2 detektierten Übergangsbereiche (12, 13).

Durch diese stufenweise Detektion von Kanten ist eine sichere Erkennung auch bei nur minimaler Schattenbildung an Übergängen von Dokumenten auf Reflektor, bei geringen Helligkeitsunterschieden zwischen Dokument und Reflektor sowie bei Störungen durch verschmutzte Reflektoren oder Optik möglich.

In vorteilhafter Weise kann die Vorverarbeitung gemäß Schritt S1 folgende Teilschritte aufweisen:
- S1a: Bildung von Mittelwerten der Pixel für jede Bildspalte im vorderen Bereich des horizontalen Übergangsbereichs vor Eintreffen des Dokumentes auf dem Reflektor zur, Erzeugung einer Mittelwert-Zeile und Ermittlung eines Mittelwerts des gesamten vorderen Bereichs des horizontalen Übergangsbereichs vor Eintreffen des Dokuments auf dem Reflektor,
- S1b: Ermittlung eines Wichtungsfaktors für jede Bildspalte aus der Größe der Abweichungen der Mittelwerte der Pixel für den jeweiligen Anfang der Bildspalte von den Mittelwerten der Pixel für das jeweilige Ende der Bildspalte und der Standardabweichung der jeweiligen Bildspalte,
- S1c: Berechnung eines neuen Bildes unter Berücksichtigung des Wichtungsfaktors und dem Mittelwert des horizontalen Übergangsbereichs.

Erfindungsgemäß können die statistischen Größen für jeden Bildstreifen gemäß der Schritte S2b und S2c der Mittelwert und/oder die Standardabweichung sein.

In vorteilhafter Weise kann die Feinerkennung der Dokumentenkanten gemäß Schritt S3 folgende Teilschritte aufweisen:
- S3a: Detektion von horizontalen und/oder vertikalen Dokumentenkanten innerhalb der Übergangsbereiche mittels Verfahren zur Kantendetektion und
- S3b: Ermittlung der ersten Kante mittels Schwellwertvergleich.

Erfindungsgemäß kann die Feinerkennung der Dokumentenkanten gemäß Schritt S3 noch folgenden weiteren Teilschritt aufweisen:
- S3c: Verwendung der stärksten Kante, wenn mit dem Schwellwertvergleich gemäß Teilschritt S3b keine Kante gefunden wird.

Es hat sich als vorteilhaft erwiesen, wenn die vor den Bilderfassungselementen zur Aufnahme der Bildinformationen angeordnete Optik eine Dokumentenanlage, beispielweise eine Glasscheibe und/oder der gegenüber den Bilderfassungselementen angeordnete Reflektor eine Andrück- und Reflektorwalze sind.

Die Erfindung ist nachfolgend anhand von in der Zeichnung dargestellten Ausführungsbeispielen näher erläutert. Es zeigen:
- Figur 1: ein Scanner-System mit Bilderfassungselement und Reflektorwalze,
- Figur 2: ein Scanner-System mit kaskadenförmig angeordneten Bilderfassungselementen,
- Figur 3: einen erfindungsgemäßen Verfahrensablauf zur Detektion der Dokumentenbreite und
- Figur 4: ein Flussdiagramm des erfindungsgemäßen Verfahrensablaufs zur Detektion der Dokumentenbreite.

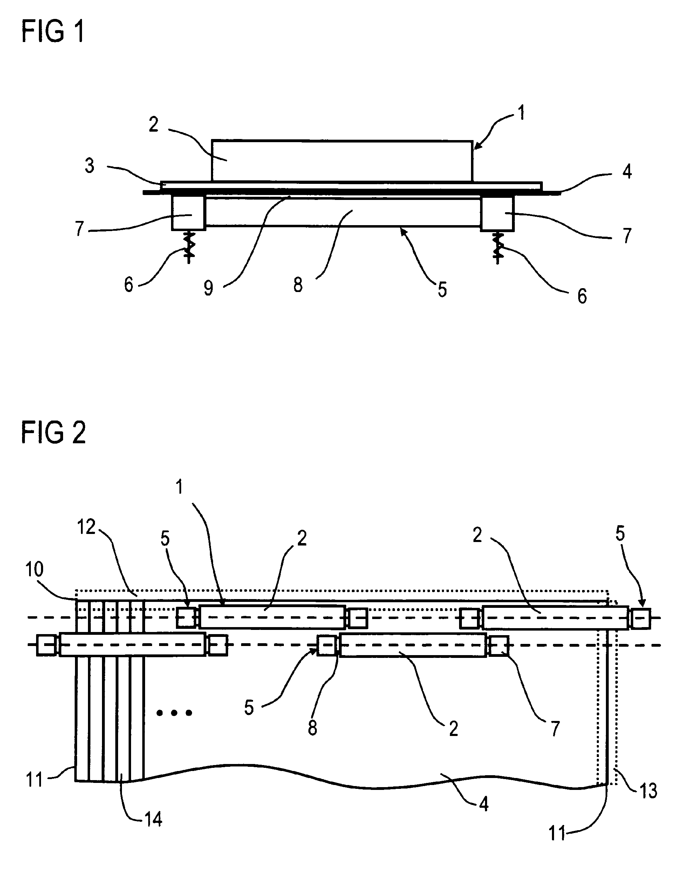

In der Figur 1 ist ein Scanner-System 1 mit einem Bilderfassungselement 2 dargestellt, vor dem eine Glasscheibe 3 angeordnet ist. Gegen diese Glasscheibe 3 wird ein Dokument 4 durch eine Reflektorwalze 5 mittels Federn 6 gedrückt. Die Federn 6 greifen dabei kraftmäßig an Seitenbereichen 7 der Reflektorwalze 5 an und drücken damit die Reflektorwalze 5 auf das Dokument 4. Die Seitenbereiche 7 der Reflektorwalze 5 kann, wie hier gezeigt mit seitlichen Anschlägen versehen sein, die einen größeren Durchmesser aufweisen als der Mittenbereich 8 der Reflektorwalze 5. Dadurch bildet sich zwischen der Reflektorwalze 5 und der Glasscheibe 3 im Mittenbereich 8 ein Spalt 9, der eine definierte Größe aufweist, die eine optimale Anlage des Dokuments 4 an der Glasscheibe 3 sicherstellt. Zum Anderen sorgt der Spalt 9 im Mittenbereich 8 der Reflektorwalze 5 für genügend Raum für das Dokument 4. Selbstverständlich können auch anders ausgestaltete Reflektorwalzen Anwendung finden.

In der Figur 2 ist ein Scanner-System 1 mit vier zum Scannen eines großformatigen Dokuments kaskaden- oder zickzackförmig angeordneten Bilderfassungselementen 2 in Aufsicht dargestellt. Hier kann aber z.B. auch ein durchgängiges Bilderfassungselemente verwendet werden. Jedem Bilderfassungselement 2 ist eine Reflektorwalze 5 zugeordnet. Das Dokument 4 weist eine Vorderkante 10 und Seitenkanten 11 auf. Vor der Vorderkante 10 des Dokuments 4 beginnt ein horizontaler Übergangsbereich 12 von Reflektor bzw. Reflektorwalze 5 auf Dokument 4. Im Bereich der Seitenkanten 11 des Dokuments 4 liegen vertikale Übergangsbereiche 13 von Reflektorwalze 5 auf Dokument 4.

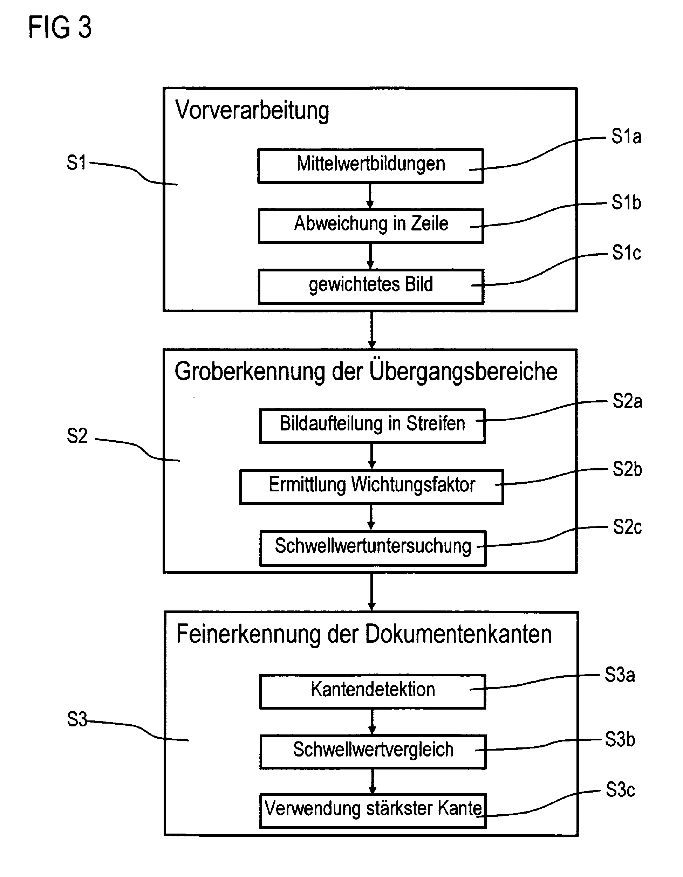

Die erfindungswesentlichen Verfahrensschritte werden nachfolgend anhand der Figur 3 näher erläutert, wobei das Verfahren drei Hauptschritte aufweist.

In einem ersten Hauptschritt S1 wird eine Vorverarbeitung der aufgenommenen und von den Bilderfassungselementen 2 erfassten Bildinformationen zur Reduzierung von Störungen durch Verschmutzungen der Optik z.B. der Glasscheibe 3 und des Reflektors z.B. der Reflektorwalze 5 durchgeführt. Als zweiter Hauptschritt S2 erfolgt eine Groberkennung von horizontalen und/oder vertikalen Übergangsbereichen 12 und 13 zwischen dem Dokument 4 und der Reflektorwalze 5. In einem weiteren Hauptschritt S3 wird eine Feinerkennung von horizontalen und/oder vertikalen Dokumentenkanten 10 und 11 innerhalb der durch die Groberkennung gemäß Schritt S2 detektierten Übergangsbereiche 12 und 13 zwischen dem Dokument 4 und der Reflektorwalze 5 zur genauen Erkennung der Vorderkante 10 und Seitenkanten 11 des Dokuments 4 als Übergang von der Reflektorwalze 5 auf das Dokument 4 bewirkt.

Diese drei Hauptschritte können nochmals erfindungsgemäß in folgende Unter-oder Teilschritte untergliedert sein:
In einem ersten Teilschritt S1a des Hauptschritts S1 der Vorverarbeitung werden Mittelwerte der Pixel für jede Bildspalte (S) im vorderen Bereich des horizontalen Übergangsbereich 12 vor Eintreffen des Dokuments 4 auf die Reflektorwalzen 5, zur Erzeugung einer Mittelwert-Zeile (ZM) ermittelt. Zudem erfolgt die Ermittlung eines Mittelwerts (M) des gesamten horizontalen Übergangsbereichs 12.

Als zweitem Teilschritt S1b wird ein Wichtungsfaktors für jede Bildspalte in Abhängigkeit von der Größe der Abweichung der Mittelwerte des vorderen und des restlichen Bildbereichs der Bildspalte und der Standardabweichung der Gesamtspalte ermittelt.

In einem weiteren Teilschritt S1c wird ein neues Bild unter Berücksichtigung des Wichtungsfaktors (W) und des Mittelwerts (M) des horizontalen Übergangsbereichs (12), des gesamten vorderen Bereichs, berechnet

In einem ersten Teilschritt S2a des zweiten Hauptschritts S2, der Groberkennung, erfolgt eine Aufteilung des Scan-Bilds in vertikaler Richtung in gleichmäßige Bildstreifen 14.

Als zweitem Teilschritt S2b werden statistische Größen für jeden Bildstreifen 14 ermittelt, wobei der Mittelwert und/oder die Standardabweichung berechnet werden können.

In einem weiteren Teilschritt S2c wird eine Untersuchung des Scan-Bilds in den Bildstreifen 14 mit festen Schwellwerten auf Abweichungen derart durchgeführt, dass, wenn ein Wert eine der statistischen Größen eines Bildstreifens 14 den Schwellwert übersteigt, dieser Bereich als vertikaler Übergangsbereich 13 zwischen Reflektorwalze 5 und Dokument 4 erkannt wird.

Als erstem Teilschritt S3a des dritten Hauptschritts S3, der Feinerkennung, werden horizontale und/oder vertikale Dokumentenkanten 10 und 11 innerhalb der Übergangsbereiche 12 und 13 mittels Verfahren zur Kantendetektion erkannt.

In einem weiteren Teilschritt S3b folgt eine Ermittlung der ersten Kante mittels Schwellwertvergleich, wie nachfolgend noch beschrieben ist.

Wird mit dem Schwellwertvergleich gemäß Teilschritt S3b keine Kante gefunden, kann in einem dritten Teilschritt S3c die stärkste der ermittelten Dokumentenkanten verwendet werden.

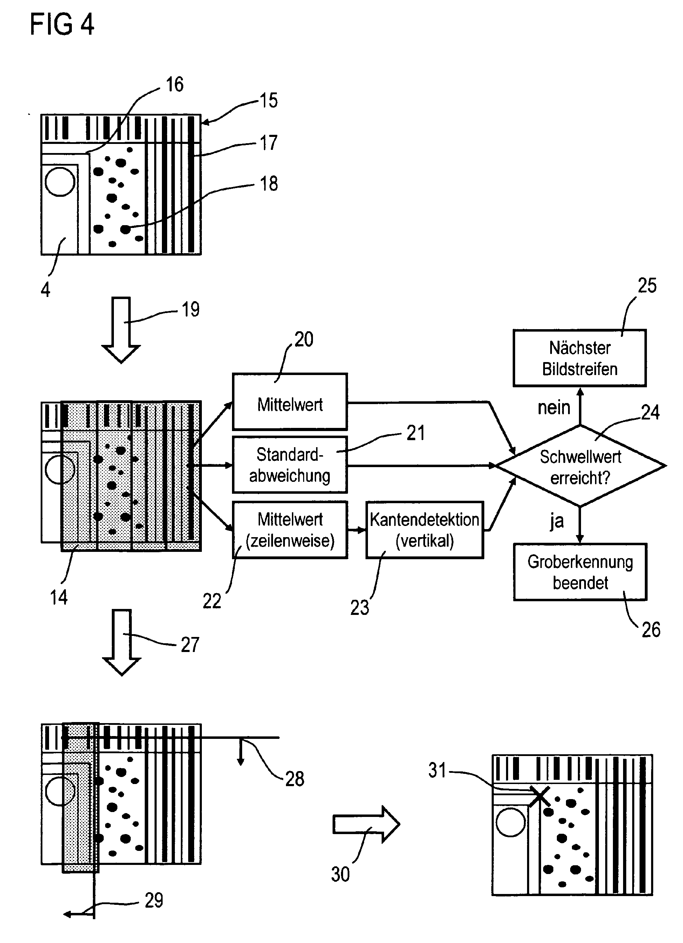

In der Figur 4 ist ein Flussdiagramm des erfindungsgemäßen Verfahrensablaufs zur Detektion der Dokumentenbreite dargestellt. In einem Scanbereich 15 ist das Dokument 4 an einer Ecke zu erkennen, an dessen Dokumentenkanten 10 und 11 ein Schattenwurf 16 entsteht. Durch Verschmutzung von stehenden Reflektorwalzen 5 bzw. der Optik / Glasscheibe 3 entstehende streifenförmige Störungen 17 werden außen und durch Verschmutzungen von rotierenden Reflektorwalzen 5 entstehende punktförmige Störungen 18 werden in einem inneren Bereich außerhalb des Dokuments 4 erfasst.

Nach der oben beschriebenen Vorverarbeitung 19 werden in der Groberkennung innerhalb eines der vertikal ausgerichteten Bildstreifen 14 gleichzeitig der Mittelwert 20, die Standardabweichung 21 und der Zeilenmittelwert 22 ermittelt. Aufgrund des Zeilenmittelwerts 22 wird eine vertikale Kantendetektion 23 durchgeführt. Diese drei Werte 20, 21 und 23 werden mit jeweils einem Schwellwert verglichen und aufgrund dieses Vergleichs wird eine Abfrage 24 "Schwellwert erreicht?" durchgeführt. Im Falle "nein" wird mit "Nächster Bildstreifen" 25 zum nächsten Bildstreifen 14 gewechselt und erneut die Auswertungen 20 bis 23 durchgeführt. Bejahendenfalls wird nach der Verzweigung 24 die "Groberkennung beendet" 26.

Dann wird zur Feinerkennung 27 gewechselt, in der ausgehend von dem Bildstreifen 14, der dadurch in der Groberkennung detektiert wurde, dass bei ihm der Schwellwert erreicht wurde, zuerst eine Detektion horizontaler Kanten 28 wie beispielsweise den Schattenwurf 16 der Dokumentenkante 10 und anschließend eine Detektion vertikaler Kanten 29 wie beispielsweise den Schattenwurf 16 der Dokumentenkante 11 ausgeführt werden. Deren Ergebnis 30 ist eine Markierung 31 der Dokumentenecke. Wird dieser Vorgang auch auf den anderen Dokumentenecken durchgeführt, können aus diesen Angaben die Breite und die Position des Dokuments 4 berechnet und angegeben werden.

Als Eingangsdaten zur Detektion der Dokumentenbreite und Position in einem großformatigen Durchzugsscanner dienen Bildinformationen des mittels der Bilderfassungselemente 2 des großformatigen Scanner-Systems 1 aufgenommenen vorderen Bereichs des Dokuments 4 mit der Vorderkante 10 und den Seitenkanten 11.

Das Verfahren lässt sich also in drei Teilschritte unterteilen, die durch einen übergeordneten Algorithmus, die aufeinander folgende Abarbeitung der einzelnen Teilschritte, miteinander verknüpft werden:
- Vorverarbeitung zur Reduzierung von Störungen durch Verschmutzungen von Reflektor (Reflektorwalze 5) und Optik (Glasscheibe 3),
- Groberkennung der Übergangsbereiche 12 und 13 zwischen Dokument 4 und Reflektorwalze 5 innerhalb von Bildstreifen 14 sowie
- Feinerkennung innerhalb des durch die Groberkennung eingekreisten Bereichs, deines detektierten Bildstreifens 14, zur genauen Erkennung der Vorderkante 10 des Dokuments 4 und des Übergangs Reflektor/Dokument, der senkrechten Dokumentenkanten, der Seitenkanten 11 des Dokuments 4.

### Vorverarbeitung

Ziel der Vorverarbeitung ist es, Streifen und/oder Störungen, die durch Verschmutzungen der nicht rotierenden Reflektorwalzen 5 und/oder der Optik des Scanner-Systems 1, insbesondere der Glasscheibe 3, entstehen, zu reduzieren, um so die Wahrscheinlichkeit von Fehlerkennungen zu vermindern.

Um zu verhindern, dass auch die senkrechten Dokumentenkanten, die Seitenkanten 11 des Dokuments 4, bei dieser Vorverarbeitung abgeschwächt bzw. entfernt werden, muss ein Unterscheidungsmerkmal vorhanden sein. Um dies zu erhalten, wird ein signifikanter Bereich vor der Vorderkante 10 des Dokuments 4, des horizontalen Übergangsbereichs 12 zwischen Dokument 4 und Reflektorwalze 5, bei der Erzeugung des Eingangsbildes mit erfasst. Das Verfahren macht sich dann zunutze, dass im vorderen Bildbereich innerhalb des horizontalen Übergangsbereichs 12 zwischen Dokument 4 und Reflektorwalze 5 noch kein Dokument 4 vorhanden ist.

Dazu wird zunächst für jede Bildspalte (S), eine Spalte mit der Breite eines Pixels, im vorderen Bereich, in dem sich sicher noch kein Dokument 4 befindet, der Mittelwert der Pixel in dieser Spalte (S) gebildet. Das Ergebnis ist eine Bildzeile mit den Mittelwerten im vorderen Scanbereich, eine sogenannte Mittelwert-Zeile (ZM). Zusätzlich wird der Mittelwert des gesamten horizontalen Übergangsbereichs 12 zwischen Dokument 4 und Reflektorwalze 5 ermittelt.

Im restlichen Bild wird nun für jede Zeile jeweils die absolute Abweichung der Pixel der Zeile von den Pixeln der Mittelwert-Zeile (ZM) ermittelt und daraus unter Berücksichtigung eines im Folgenden beschriebenen Wichtungsfaktors und dem Mittelwert des gesamten vorderen Bereichs ein neues Bild berechnet. Störungen 17, die gleichförmig in jeder Bildzeile auftreten, wie sie von verschmutzten, nicht rotierenden Reflektorwalzen 5 oder Verschmutzungen in der Optik hervorgerufen werden, werden somit eliminiert.

Um zu verhindern, dass Störungen 18, die nicht gleichförmig auf jede Zeile wirken, nicht zu neuen störenden Streifen führen, kann über den Wichtungsfaktor beeinflusst werden, ob eher der Mittelwert der Spalte oder der Gesamtmittelwert des vorderen Bildbereichs in das Ergebnis einbezogen werden. Der Wichtungsfaktor selbst wird für jede Spalte in Abhängigkeit der Größe der Abweichung der Mittelwerte des vorderen und restlichen Bildbereichs der Spalte und der Standardabweichung der Gesamtspalte ermittelt.

Somit wird sichergestellt, dass in Bereichen in denen die Störung 18 nicht gleichförmig auf alle Bildzeilen wirkt, durch das Verfahren keine neuen Störungen entstehen. Dies ist insbesondere bei Störungen durch Verschmutzungen auf den Reflektorwalzen 5 der Fall, wenn diese im vorderen Bereich nicht rotieren und später durch das Dokument 4 in Rotation versetzt werden, da hier die Verschmutzungen auf der Reflektorwalze 5 nicht gleichförmig auf alle Bildzeilen wirken und somit mit dem Verfahren nicht zu eliminieren sind. Diese Bereiche bleiben weitgehend unverändert. Da das später beschriebene Verfahren zur Detektion der Übergänge zwischen Reflektorwalze 5 und Dokument 4 auf einer Kantendetektion beruht, sind diese eher punktförmigen Störungen18 unkritisch.

### Groberkennung

Die Groberkennung dient dazu, den Übergangsbereich zwischen Reflektor und Dokument 4 schnell, aber mit geringer Genauigkeit zu bestimmen, u. a. um den Suchbereich für die spätere Feinerkennung zu verringern.

Dazu wird das Bild zunächst in vertikaler Richtung in gleichmäßige Bildstreifen 14 aufgeteilt. Für jeden Bildstreifen 14 werden die statistischen Größen - der Mittelwert und die Standardabweichung - bestimmt. Die Bildstreifen 14 werden nun vom äußeren Bildrand ausgehend durchlaufen und mit festen Schwellwerten auf Abweichungen untersucht. Übersteigt ein Wert eine der statistischen Größen - Mittelwert oder Standardabweichung - eines Bildstreifens 14 den Schwellwert, wird dieser Bereich als Übergangsbereich 13 (vertikale Übergangsbereiche 13 zwischen Dokument 4 und Reflektorwalze 5) erkannt. Zusätzlich wird geprüft, ob die Werte der folgenden Bildstreifen 14 ebenfalls über dem Schwellwert liegen, um die Robustheit des Verfahrens gegenüber Störungen zu erhöhen.

Damit kann der Übergangsbereich 13 bei Dokumenten 4, deren Farbe und/oder Helligkeit sich von der der Reflektorwalzen 5 unterscheiden oder einen nennenswerten Informationsgehalt in dem Randbereich aufweisen, sicher erkannt werden.

Um auch Dokumente 4 mit einer ähnlichen Farbe und/oder Helligkeit wie die Reflektorwalzen 5 und ohne nennenswerten Informationsgehalt in den Randbereichen erkennen zu können, wird zusätzlich ein auf der Erkennung der Vorderkante 10 basierendes Verfahren eingesetzt. Der Hintergrund ist, dass auch bei modernen CI-Sensoren mit Mehrfachbeleuchtung ein hinreichend starker Schattenwurf 16 an der Dokumentenvorderkante 10 sichtbar ist.

Für jeden der oben erwähnten Bildstreifen 14 wird jeweils zeilenweise der Mittelwert gebildet. Somit entsteht aus dem zweidimensionalen Bildstreifen 14 eine eindimensionale Datenreihe. In dieser wird mit den bekannten Verfahren zur Kantendetektion nach einer hinreichend starken und steilen Kante gesucht. Dazu werden die Bildstreifen 14 wiederum ausgehend von den äußeren Bildbereichen durchlaufen und der erste Bildstreifen 14 mit hinreichend starker und steiler Kante ermittelt. Es wird dann davon ausgegangen, dass sich hier der Übergang zwischen Reflektorwalze 5 und Dokument 4 befindet. Dieses Verfahren ist sehr robust gegenüber Störungen die gleichförmig auf alle Bildzeilen wirken, wie sie durch Verschmutzungen auf den nicht rotierenden Reflektorwalzen oder der Optik (insbesondere Glasscheibe) des Scanners auftreten können. Wichtig ist hier insbesondere die "Steilheit" der Kante zu berücksichtigen, da durch Änderungen der Größe des Luftspaltes zwischen Reflektorwalze 5 und Glasscheibe 3 beim Einlauf des Dokuments 4 zwischen Glasscheibe 3 und Reflektorwalzen 5 in den Bereichen neben dem Dokument 4 auch Kanten, jedoch mit niedrigerer "Steilheit", entstehen. Zusätzlich wird in dem Bereich, in dem der Übergang zwischen Reflektorwalze 5 und Dokument 4 durch die zuvor beschriebenen Verfahren erkannt wurde, eine Detektion einer "schiefen" Vorderkante im benachbarten Bereich durchgeführt. Dafür wird das zuvor genannte Verfahren eingesetzt, die Bildstreifen 14 werden jedoch nicht orthogonal zur Waagerechten geschnitten, sondern schrittweise bis zu 90°, vorzugsweise 45° gedreht. Dadurch kann auch ein Dokument mit abgeknickten Ecken, sogenannte Eselsohren, oder Ausrissen in den Eckbereichen sicher erkannt werden.

### Feinerkennung

Die Feinerkennung der Dokumentenkanten 10 und 11 erfolgt über die bekannten Verfahren zur Kantendetektion, wie z.B. Sobel- oder Laplace-Operator. Da der Suchbereich durch die Groberkennung bereits stark eingeschränkt wurde und die meisten Störungen 17 oder 18 durch die Vorverarbeitung eliminiert wurden, ist die Trefferquote sehr hoch. Um zu verhindern, dass Kanten im Dokument 4 fälschlicherweise als Übergang zwischen Reflektorwalze 5 und Dokument 4 erkannt werden, wird mit einem Schwellwert die erste Kante ermittelt. Wird mit dem Schwellwert keine Kante gefunden, wird die stärkste Kante verwendet. Bei Vorlagen mit extrem schwacher Kante am Übergang zwischen Reflektorwalze 5 und Dokument 4, beispielsweise bei dünnen Transparenten, wird somit auch eine gute Erkennung gewährleistet, da in diesem Fall die erste Kante im Dokument 4 detektiert wird, beispielsweise eine Umrahmung bei technischen Zeichnungen, und auf jeden Fall ein Wert innerhalb der durch die Groberkennung (sicher) eingeschränkten Bereichs Verwendung findet.

Die Vorteile des neuen Verfahrens gegenüber bekannten Verfahren sind, dass eine sichere Erkennung auch bei nur minimalem Schattenwurf 16 an senkrechten Übergängen zwischen Reflektor, wie der Reflektorwalze 5, und Dokument 4 und geringen Helligkeitsunterschieden zwischen Dokument 4 und Reflektorwalze 5 sowie Störungen 17 und/oder 18 durch verschmutzte Reflektorwalzenen 5 und Optik, beispielsweise der Glasscheibe 3, erfolgt. Auch Dokumente 4 mit Eselsohren und/oder eingerissenen Ecken lassen sich sicher erkennen.

Es hat sich herausgestellt, dass das Verfahren auch mit anderen Vorverarbeitungen der Bilddaten und sogar bei Weglassung der Vorverarbeitungen der Bilddaten gute Ergebnisse zeigt.

### Bezugszeichenliste

- 1: Scanner-System
- 2: Bilderfassungselemente
- 3: Glasscheibe
- 4: Dokument
- 5: Reflektorwalze
- 6: Federn
- 7: Seitenbereiche
- 8: Mittenbereich
- 9: Spalt
- 10: Vorderkante des Dokuments
- 11: Seitenkanten des Dokuments
- 12: horizontaler Übergangsbereich
- 13: vertikaler Übergangsbereich
- 14: Bildstreifen
- 15: Scanbereich
- 16: Schattenwurf an Dokumentenkante
- 17: streifenförmige Störungen
- 18: punktförmige Störungen
- 19: Vorverarbeitung
- 20: Mittelwert
- 21: Standardabweichung
- 22: Zeilenmittelwert
- 23: Kantendetektion (vertikal)
- 24: Abfrage "Schwellwert erreicht?"
- 25: Nächster Bildstreifen
- 26: Groberkennung beendet
- 27: Feinerkennung
- 28: Kantendetektion (vertikal)
- 29: Kantendetektion (horizontal)
- 30: Ergebnis
- 31: Markierung der Ecke

- A: Abweichungen
- M: Mittelwert
- S: Bildspalte
- W: Wichtungsfaktor
- Z: Bildzeile
- ZM: Mittelwert-Zeile

## Patentansprüche

1. Verfahren zur Erkennung der Breite und Position von Dokumenten (4) in einem großformatigen Scanner-System (1) anhand aufgenommener Bildinformationen, wobei das Scanner-System (1) mindestens ein Bilderfassungselement (2) zur Aufnahme der Bildinformationen, eine davor angeordneten Optik und mindestens eine den Bilderfassungselementen (2) gegenüber angeordneten Reflektor aufweist,
**gekennzeichnet durch**
folgende Schritte:
S1 Vorverarbeitung der, vor Eintreffen des Dokuments (4) auf dem Reflektor aufgenommenen Bildinformationen zur Reduzierung von Störungen durch Verschmutzungen von Optik und Reflektor,
S2 Groberkennung von horizontalen und/oder vertikalen Übergangsbereichen (12, 13) von Reflektor auf das Dokument (4) mit den Teilschritten
S2a Aufteilung des Scan-Bilds in vertikaler Richtung in gleichmäßige Bildstreifen (14),
S2b Ermittlung von statistischen Größen für jeden Bildstreifen (14),
S2c Untersuchung des Scan-Bilds in den Bildstreifen (14) mit festen Schwellwerten auf Abweichungen, derart, dass, wenn ein Wert eine der statistischen Größen eines Bildstreifens (14) den Schwellwert übersteigt, dieser Bereich als vertikaler Übergangsbereich (13) zwischen Reflektor und Dokument (4) erkannt wird,
S2d Untersuchung der Bildstreifen (14) zur Bestimmung des horizontalen Übergangsbereiches (12) **durch** zeilenweise Bildung des Mittelwertes und Ermittlung hinreichend starker und steiler Kanten,
wobei die Bildstreifen (14) von der Senkrechten schrittweise bis zu einem Winkel von 90°, vorzugsweise 45° gedreht werden, und
S3 Feinerkennung von horizontalen und/oder vertikalen Dokumentenkanten (10, 11) innerhalb der **durch** die Groberkennung gemäß Schritt S2 detektierten Übergangsbereiche (12, 13).

2. Verfahren nach Anspruch 1,
**dadurch gekennzeichnet,**
**dass** die Vorverarbeitung gemäß Schritt S1 folgende Teilschritte aufweist:
S1a Bildung von Mittelwerten der Pixel für jede Bildspalte (S) im vorderen Bereich des horizontalen Übergangsbereichs (12), vor Eintreffen des Dokuments (4) auf dem Reflektor, zur Erzeugung einer Mittelwert-Zeile (ZM) und
Ermittlung eines Mittelwerts (M) des gesamten vorderen Bereichs des horizontalen Übergangsbereichs (12) vor Eintreffen des Dokuments (4) auf dem Reflektor,
S1b Ermittlung eines Wichtungsfaktors (W) für jede Bildspalte (S) aus der Größe der Abweichungen der Mittelwerte der Pixel für den jeweiligen Anfang der Bildspalte (S) von den Mittelwerten der Pixel für das jeweilige Ende der Bildspalte (S) und der Standardabweichung der jeweiligen Bildspalte (S),
S1c Berechnung eines neuen Bildes aus den aufgenommenen Bildinformationen unter Berücksichtigung des Wichtungsfaktors (W) und dem Mittelwert (M) des horizontalen Übergangsbereichs (12).

3. Verfahren nach Anspruch 1 oder 2,
**dadurch gekennzeichnet,**
**dass** die statistischen Größen für jeden Bildstreifen (14) gemäß der Schritte S2b und S2c der Mittelwert und/oder die Standardabweichung sind.

4. Verfahren nach einem der Ansprüche 1 bis 3,
**dadurch gekennzeichnet,**
**dass** die Feinerkennung der Dokumentenkanten (10, 11) gemäß Schritt S3 folgende Teilschritte aufweist:
S3a Detektion von horizontalen und/oder vertikalen Dokumentenkanten (10, 11) innerhalb der Übergangsbereiche (12, 13) mittels Verfahren zur Kantendetektion und
S3b Ermittlung der ersten Kante mittels Schwellwertvergleich.

5. Verfahren nach Anspruch 4,
**dadurch gekennzeichnet,**
**dass** die Feinerkennung der Dokumentenkanten (10, 11) gemäß Schritt S3 noch folgenden weiteren Teilschritt aufweist:
S3c Verwendung der stärksten Kante, wenn mit dem Schwellwertvergleich gemäß Teilschritt S3b keine Kante gefunden wird.

6. Verfahren nach einem der Ansprüche 1 bis 5,
**dadurch gekennzeichnet,**
**dass** die vor den Bilderfassungselementen (2) zur Aufnahme der Bildinformationen angeordnete Optik eine Dokumentenanlage beispielsweise eine Glasscheibe (3) und/oder der gegenüber den Bilderfassungselementen (2) angeordnete Reflektor eine Andrück- und Reflektorwalze (5) sind.

## Claims

1. A method for detecting the width and position of documents (4) in a large-format scanner system (1) by way of recorded image information, wherein the scanner system (1) comprises at least one image capturing element (2) for recording the image information, an optics arranged in front of it and at least one reflector arranged opposite the image capturing elements (2),
**characterised by**
the following steps:
S1 pre-processing the image information recorded at the reflector prior to arrival of the document (4) for reducing interferences caused by contamination of the optics and the reflector,
S2 rough detection of horizontal and/or vertical transition areas (12, 13) between the reflector and the document (4) comprising the following sub-steps:
S2a dividing the scanned image in vertical direction into uniform image strips (14),
S2b ascertaining statistical variables for each image strip (14),
S2c examining the scanned image in the image strips (14) with fixed threshold values for deviations such that if a value of the statistical variables of an image strip (14) exceeds the threshold value, this area is recognised as a vertical transition area (13) between reflector and document (4),
S2d examining the image strips (14) in order to determine the horizontal transition area (12) through forming the mean value row by row and ascertaining sufficiently strong and steep edges,
wherein the image strips (14) are rotated from the vertical step by step to an angle of 90°, preferably 45°, and
S3 fine recognition of horizontal and/or vertical document edges (10, 11) within the transition areas (12, 13) detected by rough recognition in step S2.

2. The method according to claim 1,
**characterised in that**
pre-processing as per step S1 comprises the following sub-steps:
S1a forming mean values of the pixels for each image column (S) in the front section of the horizontal transition area (12), prior to arrival of the document (4) at the reflector, for generating a mean value row (ZM) and
ascertaining a mean value (M) of the entire front section of the horizontal transition area (12) prior to arrival of the document (4) at the reflector,
S1b ascertaining a weighting factor (W) for each image column (S) from the size of the deviations of the mean values of the pixels for the respective start of the image column (S) from the mean values of the pixels for the respective end of the image column (S) and the standard deviation of the respective image column (S),
S1c calculating a new image from the recorded image information taking account of the weighting factor (W) and a mean value (M) of the horizontal transition area (12).

3. The method according to clam 1 or 2,
**characterised in that**
the statistical variables for each image strip (14) according to steps S2b and S2c are the mean value and/or the standard deviation.

4. The method according to one of claims 1 to 3,
**characterised in that**
fine recognition of the document edges (10, 11) according to step S3 comprises the following sub-steps:
S3a detecting horizontal and/or vertical document edges (10, 11) within the transition areas (12, 13) by means of methods for edge detection, and
S3b ascertaining the first edge by means of a threshold comparison.

5. The method according to claim 4,
**characterised in that**
fine recognition of the document edges (10, 11) according to step S3 also comprises the following further sub-step:
S3c using the strongest edge, if the threshold comparison according to sub-step S3b is unsuccessful in finding an edge.

6. The method according to one of claims 1 to 5,
**characterised in that**
the optics arranged in front of the image capturing elements (2) for recording the image information is a paper guide such as a glass pane (3) and/or **in that** the reflector arranged opposite the image capturing elements (2) is a contact- and reflector-roller (5).

## Revendications

1. Procédé pour la reconnaissance de la largeur et de la position de documents (4) dans un système de balayage grand-format (1) à l'aide d'informations d'image enregistrées, le système de balayage (1) présentant au moins un élément de capture d'images (2) pour enregistrer les informations d'image, une optique disposée en amont et au moins un réflecteur disposé en vis-à-vis des éléments de capture d'images (2),
**caractérisé par**
les étapes suivantes :
S1 le prétraitement des informations d'image avant l'arrivée du document (4) sur le réflecteur pour la réduction de perturbations dues à des salissures de l'optique et du réflecteur,
S2 la reconnaissance grossière de zones de transition (12, 13) horizontales et/ou verticales du réflecteur vers le document (4) avec les étapes partielles :
S2a le partage de l'image de balayage, en direction verticale, en bandes d'image (14) régulières,
S2b la détermination de grandeurs statistiques pour chaque bande d'image (14),
S2c l'analyse de l'image de balayage dans les bandes d'image (14) avec des valeurs de seuil fixes quant à des écarts de manière à ce que, lorsqu'une valeur de l'une des grandeurs statistiques d'une bande d'image (14) dépasse la valeur de seuil, cette zone est reconnue en tant que zone de transition (13) verticale entre le réflecteur et le document (4),
S2d l'analyse des bandes d'image (14) pour la détermination de la zone de transition (12) horizontale grâce à la formation par ligne de la valeur moyenne et la détermination d'arêtes suffisamment marquées et prononcées,
les bandes d'image (14) étant soumises à une rotation à partir de la position verticale, progressivement, jusqu'à un angle de 90°, de préférence de 45°,
S3 la reconnaissance de précision d'arêtes de documents (10, 11) horizontales et/ou verticales à l'intérieur des zones de transition (12, 13) détectées grâce à la reconnaissance grossière conformément à l'étape S2.

2. Procédé selon la revendication 1,
**caractérisé en ce que**
le prétraitement conformément à l'étape S1 comprend les étapes partielles suivantes :
S1a la formation de valeurs moyennes des pixels pour chaque colonne d'image (S) dans la zone antérieure de la zone de transition horizontale (12) avant l'arrivée du document (4) sur le réflecteur, pour la génération d'une ligne à valeur moyenne (ZM) et
la détermination d'une valeur moyenne (M) de l'ensemble de la zone antérieure de la zone de transition horizontale (12) avant l'arrivée du document (4) sur le réflecteur,
S1b la détermination d'un facteur de pondération (W) pour chaque colonne d'image (S) à partir de la grandeur des écarts entre les valeurs moyennes des pixels pour le début respectif de la colonne d'image (S) et les valeurs moyennes des pixels pour la fin respective de la colonne d'image (S) et de l'écart type de la colonne d'image (S) respective,
S1c le calcul d'une nouvelle image à partir des informations d'image enregistrées en tenant compte du facteur de pondération (W) et de la valeur moyenne (M) de la zone de transition horizontale (12).

3. Procédé selon la revendication 1 ou 2,
**caractérisé en ce que**
les grandeurs statistiques pour chaque bande d'image (14), conformément aux étapes S2b et S2c; sont la valeur moyenne et/ou l'écart type.

4. Procédé selon l'une des revendications 1 à 3,
**caractérisé en ce que**
la reconnaissance de précision des arêtes de documents (10, 11) conformément à l'étape S3 présente les étapes partielles suivantes :
S3a la détection d'arêtes de documents (10, 11) horizontales et/ou verticales à l'intérieur des zones de transition (12, 13) au moyen de procédés pour la détection d'arêtes, et
S3b la détermination de la première arête au moyen d'une comparaison de valeurs de seuil.

5. Procédé selon la revendication 4,
**caractérisé en ce que**
la reconnaissance de précision des arêtes de documents (10, 11) conformément à l'étape S3 comprend encore l'autre étape partielle suivante :
S3c l'utilisation de l'arête la plus marquée, lorsqu'aucune arête n'a été trouvée avec la comparaison de valeurs de seuil conformément à l'étape partielle S3b.

6. Procédé selon l'une des revendications 1 à 5,
**caractérisé en ce que**
l'optique disposée devant les éléments de capture d'images (2) pour l'enregistrement des informations d'image est une installation de documents, par exemple une plaque en verre (3) et/ou **en ce que** le réflecteur disposé en vis-à-vis des éléments de capture d'images (2) est un cylindre presseur et réflecteur (5).
